# EUROPEAN PATENT APPLICATION

(11) **EP 1 195 188 A1**
(43) Date of publication of application: **10.04.2002**
(21) Application number: 01308415.7
(22) Date of filing: 02.10.2001
(51) Int. Cl.: B01D 53/04

(54) **Chemical filter**

(30) Priority: 03.10.2000 JP 2000303884
(71) Applicant: Nitta Corporation, Osaka-shi, Osaka (JP)
(72) Inventor: Higashino, Nobuyuki, c/o Nitta Corporation, Yamatokohriyama-shi, Nara (JP); Yamamoto, Munehiro, c/o Nitta Corporation, Yamatokohriyama-shi, Nara (JP); Sumioka, Masayuki, c/o Nitta Corporation, Yamatokohriyama-shi, Nara (JP); Aramaki, Dai, c/o Nitta Corporation, Chuo-ku, Tokyo (JP)
(74) Representative: Harrison, David Christopher

(57) **Abstract**

A chemical filter includes a unit body (10) and an adsorbent (2) housed in the unit body (10). The adsorbent (2) is for adsorbing a gas. The chemical filter provides a purified gas in which the concentration of ammonia and the concentration of organic gases having a boiling point of about 150°C or higher are respectively about 1 ppb(v) or less. This purified gas is applicable for a semiconductor manufacturing system without causing troubles of tarnish or the like.

## Description

The present invention relates to an in-line chemical filter. More specifically, the present invention relates to an in-line chemical filter useful for semiconductor manufacturing systems and the like.

Conventional chemical filters have been used in an air line of a semiconductor manufacturing system. However, a very small amount of gaseous contaminant is liable to be present, being mixed in purified air, nitrogen gas or the like, which has been dust-removed by the conventional chemical filter.

As fining of semiconductor patterns has been further advanced, a tarnish is generated when a very small amount of mixed gaseous contaminant attaches to an exposure lens of a semiconductor manufacturing system. This tarnish generation has become a next-generation problem in semiconductor manufacturing. That is, along with the advancement of fine patterns, an exposure lens with the tarnish thereon cannot focus under a minimum optimization state and the optical processing of a substrate cannot be performed smoothly.

It is, therefore, an object of the present invention to provide a chemical filter which overcomes the foregoing problems. More particularly, it is an object of the present invention to provide a chemical filter capable of supplying a purified gas which hardly causes a trouble in a semiconductor manufacturing system compared to conventional ones.

To achieve the objects of the present invention, the following technical measures have been undertaken.
(1) The chemical filter of the present invention is a chemical filter for adsorbing a gas by an adsorbent housed in a chemical filter unit body. The chemical filter supplies a gas in which the concentration of ammonia and the concentration of organic gases having a boiling point of about 150°C or higher respectively are about 1 ppb (v) or less.
   The organic gases having a boiling point of about 150°C or higher easily attach to a silicon wafer. If the organic gas produces a tarnish on a lens of an exposure system or attaches to a wafer, this causes breakage of a gate-insulating film or a deterioration of an oxide-film withstand voltage. Moreover, ammonia also causes a tarnish on a lens or mirror of an exposure system or a surface of a wafer.
   With the above chemical filter in which the concentration of the above gas is particularly set to about 1 ppb (v) or less, a purified gas at or lower than the level that causes a problem in contamination is supplied. The above purified gas may include, for example, nitrogen gas and air.
(2) The foregoing unit body may be cleaned by an organic solvent and/or demineralized water, and then baked at a temperature of about 100 to 300°C receiving a continuous flow of a clean gas.
   By the above treatment, cutting oil adhered to the unit body during processing can be sufficiently removed. As cleaning methods, ultrasonic cleaning is preferable because it facilitates cleaning.
   If the baking temperature is lower than about 100°C, an organic solvent (such as IPA) may remain in the unit body. On the other hand, if the baking temperature is higher than about 300°C, the cooling time is unpreferably very much prolonged.
   The unit body is preferably made of SUS which produces less out-gas and has a high pressure proof strength. The above mentioned clean gas includes clean air, an inert gas and the like. The inert gas includes, for example, a helium gas, a nitrogen gas and the like.
(3) After being baked, the unit body may be cooled with a flow of clean gas.
   With the above cooling, harmful gases in the atmosphere may be prevented from re-adhering to the unit body during the cooling process.
(4) The unit body is fixedly provided with an opening/closing section for replacing adsorbents by means of a clamp. And the unit body optionally includes a baffle member at the upstream side of the adsorbent and a spacer at the downstream side thereof. A vulcanized fluorocarbon rubber is used for a sealing section.
   Since the opening/closing section for replacing adsorbents is fixed with the clamp, a bolt for fixing the opening/closing section is not necessary, thereby retarding out-gas production. Moreover, before reaching the adsorbent, the gas collides with the upstream-side baffle member and diffuses. This allows the gas to uniformly pass through the overall adsorbent. Furthermore, by disposing a spacer at the downstream side of the gas adsorbent, the spacer forms a space to prevent the incoming gas from passing through only the central area of the gas adsorbent, but allow it to uniformly flow through the entire area of the adsorbent. It is preferable to make vulcanization of the fluorocarbon rubber used for the sealed portion secondary or higher in order to reduce the amount of out-gas.
(5) The chemical filter of the present invention may be sealed and packaged in a vacuum-deaerated bag made of aluminum laminate. With this sealing and packaging, the purity of the chemical-filter of the present invention may be maintained.

Practical examples of the present invention will now be described with reference to the accompanying drawings, in which:
Fig. 1 is an overall perspective view of an embodiment of a chemical filter of the present invention;
Fig. 2 is a side view of the chemical filter in Fig. 1;
Fig. 3 is an exploded perspective view of the chemical filter in Fig. 1;
Fig. 4 is a half-sectional view of the chemical filter in Fig. 1;
Fig. 5 is an illustration of a baking system;
Fig. 6 is a flow diagram showing a method for measuring the out-gas discharged from an O-ring;
Fig. 7 is a flow diagram showing a method for measuring an ammonia removal efficiency; and
Fig. 8 is a flow diagram showing a method for measuring an organic-matter removal efficiency.

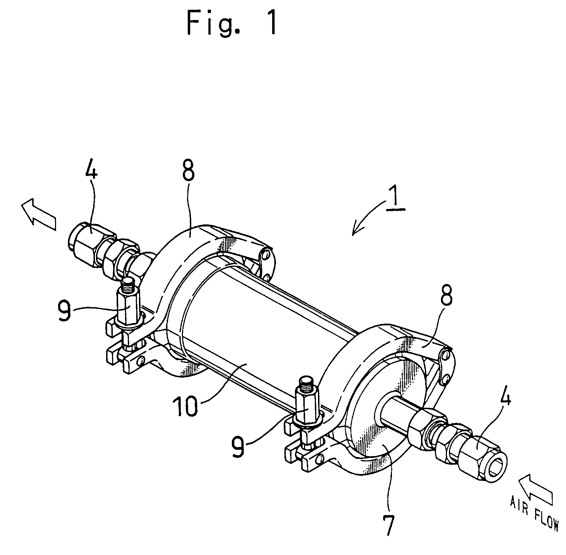

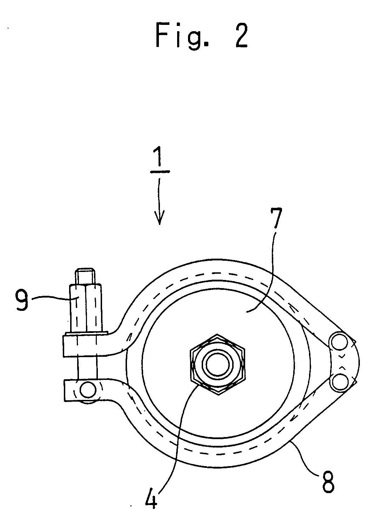

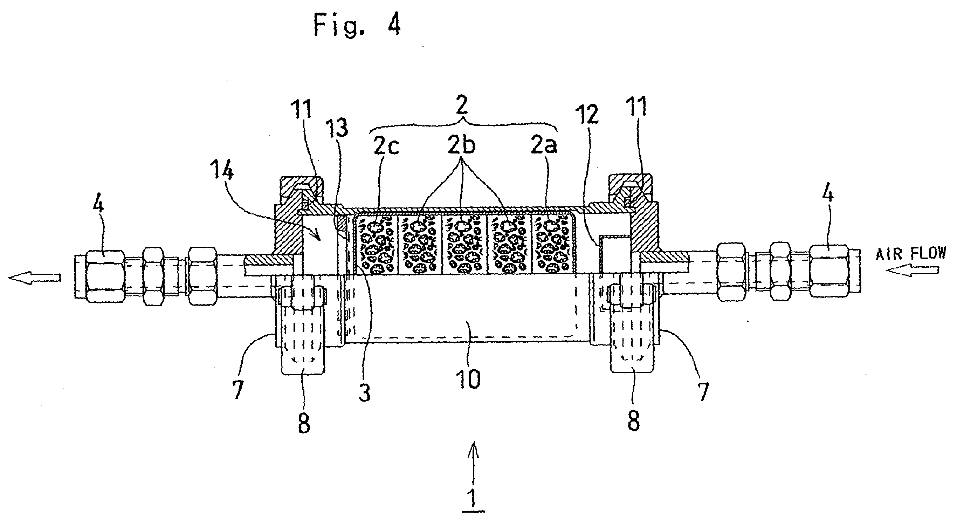

The chemical filter according to a preferred embodiment of the present invention is illustrated in Figs. 1 to 4. A chemical filter 1 is provided within a flow passage (an air line of semiconductor manufacturing system or the like) of a gas to be treated (air, nitrogen gas or the like). A gas adsorbent 2 is housed in the chemical filter 1 and enclosed by a nonwoven fabric 3 (see Fig 4). A plug 4 connects the chemical filter 1 to the passage.

As clearly shown in Fig. 4, the gas adsorbent 2 includes a plurality of different types of adsorbents, layered in the gas flow direction, enabling the removal of various types of gases. A first single-layer adsorbent 2a is provided for adsorbing alkali-based gases, a triply-layer adsorbent 2b is for adsorbing organic gases, and a second single-layer adsorbent 2c is for adsorbing acidic gases.

Opening/closing members 7 for replacing gas adsorbents 2 are provided at the both ends (the upstream and down stream ends) of a unit body 10 and fixed with the unit body 10 by respective clamps 8. Each clamp 8 is fixed by a hexagon nut 9. O-rings 11 (trademark: VITON ) made of fluorocarbon rubber are respectively provided between the upstream and downstream opening/closing members 7 made of SUS and the unit body 10 also made of SUS.

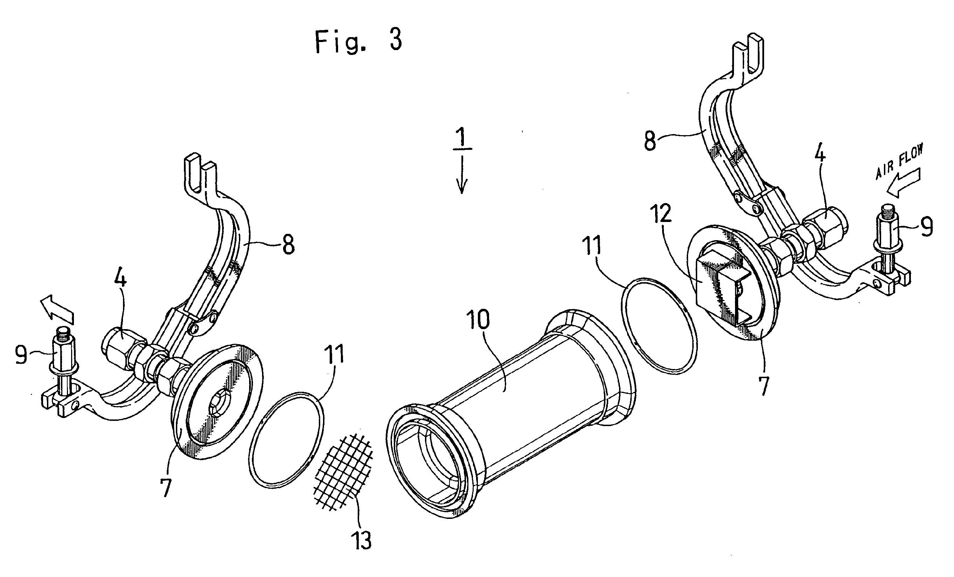

As clearly shown in Figs. 3 and 4, a baffle member 12 is provided at the upstream side of the gas adsorbent 2 in the chemical filter 1, and a lath net is provided at the downstream side of the adsorbent 2 as a spacer 13.

Since the opening/closing member 7 for changing the adsorbents 2 is fixed with the unit body 10 by the clamp 8, there is no need to use a bolt for fixing the opening/closing members 7. Thus, the chemical filter 1 may advantageously suppress the production of out-gas. The opening/closing member 7 is detachable from the unit body by a single manipulation of the clamp 8, allowing for easy washing and cleaning.

A baffle member 12 is provided at the upstream side of the gas adsorbent 2 in the chemical filter 1. Therefore, incoming gas collides with the baffle member 12 and diffuses before reaching at the gas adsorbent 2. As a result, the incoming gas is advantageously led to pass uniformly through the whole adsorbent 12.

A spacer 13 is provided at the downstream side of the gas adsorbent 2 in the chemical filter 1. The spacer 13 forms a space 14 (see Fig. 4). Therefore, the gas coming in through the plug 4 is advantageously prevented from passing through only the central area of the gas adsorbent 2 but allowed to uniformly pass through the overall adsorbent 2.

The gas flow rate in the chemical filter 1, having a cylindrical shape, was 50 l/min, and the pressure loss was about 30 Pa. The pressure loss of the chemical filter was not very large in comparison with that of a pipe connected to the filter.

The chemical filter of the present invention is further described specifically below.

### [A] Cleaning and baking of the unit body

The unit body 10 was cleaned and baked as described below.

### (Comparative example 1)

The unit body 10, on which oil or the like adhered under metal machining process, was degreased and cleaned by being soaked in a sodium-hydroxide (NaOH) solution (at the temperature of 70 to 80°C) for 20 minutes, washed with flowing water, soaked in a hydrofluoric-acid nitrate solution for 5 to 6 hours, washed with flowing water, soaked in trichloroethylene for 3 to 5 minutes, dried at the temperature of 40 to 85°C, subsequently again soaked in IPA (isopropyl alcohol) for 6 hours, and then finally naturally dried.

### (Comparative example 2)

The unit body 10 was, in addition to the treatment in the comparative example 1 stated above, further ultrasonic-cleaned by demineralized water (resistance value: 18 MΩcm; the same was applied to the following embodiments) and subsequently by IPA (a special class: the same was applied to the following embodiments) as a solvent for 10 minutes respectively.

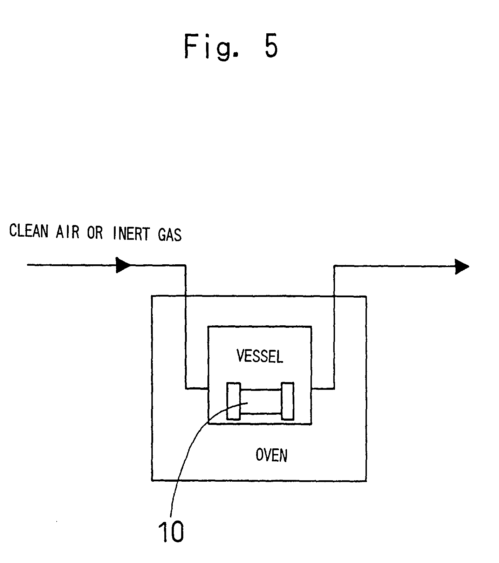

Then, as shown in Fig. 5, the cleaned unit body 10 was put in a housing vessel made of SUS (capacity of 5 l) and baked in a heated oven for 30 minutes at a temperature of 50°C with a flow at 5l/min of clean air (obtained by passing compressed air through silica gel, an air filter or a chemical filter) or an inert gas (obtained by passing nitrogen gas having a purity of 99.999% or higher through a chemical filter). Then, the oven being stopped, the unit body 10 was cooled for 30 minutes with a flow of clean air.

### (Embodiment 1)

The unit body 10 was treated by the same process as in the comparative example 2, except the 30-minute baking was conducted at a temperature of 150°C, instead of 50°C.

### (Embodiment 2)

The unit body 10 was treated by the same process as in the comparative example 2, except for the ultrasonic cleaning was conducted with IPA and then with demineralized water, and the 30-minute baking was conducted at a temperature of 200°C.

### [B] Evaluation of out-gas

The out-gas of the comparative examples 1 and 2 and the embodiments 1 and 2 was evaluated as described below.

Each unit body was put in an SUS housing vessel and heated in an oven up to 50°C while supplying clean air at 2 to 300 ml/min. The air was collected with a Tenax collection tube (a filler for adsorbing gas, Tenax (trademark) GR, was used).

The collected air was condensed by a thermal-desorption cold trap injector (TCT)(Model CP4020 made by GL Sciences Inc.) and analyzed by a gas·chromatographic mass spectroscope GC-MS (Model MD800 made by Thermo Quest K.K.). In accordance with the area of the chromatographic chart, the area was converted into the quantity of toluene and determined. And the determined quantity of toluene was divided by the sampled quantity to calculate the concentration of the out-gas in the air. The results are shown below.

### (Comparative example 1)

The toluene-converted value TOC of collected acetic acid, diethylene glycol and decanal (the out-gas) exhibited 0.193 µg/hr.

### (Comparative example 2)

The toluene-converted value TOC of collected IPA showed 26.845 µg/hr. This seems that IPA used for cleaning at the temperature of 50°C was left. IPA has a boiling point of 82.4°C.

### (Embodiment 1)

There was not any particularly high peak in the chromatographic chart and the toluene-converted value TOC showed 0.022 µg/hr. IPA was hardly left through heating at 150°C and cleaned up to about 1/10 of the comparative example 1.

### (Embodiment 2)

There was not any particularly high peak in the chromatographic chart and the toluene-converted value TOC showed 0.023 µg/hr. The same effect as in heating at 150°C was obtained by heating at 200°C.

### [C] Sealed portion of chemical filter

It is preferable to use a material causing a minimum quantity of out-gas for the sealed portion of a chemical filter. The sealed portion may be an O-ring 11 of a normal product (a primary vulcanized product) made of chloroprene rubber, EPT or fluorocarbon rubber (trademark: VITON). However, in the viewpoint of reduction of out-gas, a secondary vulcanized product of fluorocarbon rubber (trademark: VITON ) is preferable for the sealed portion.

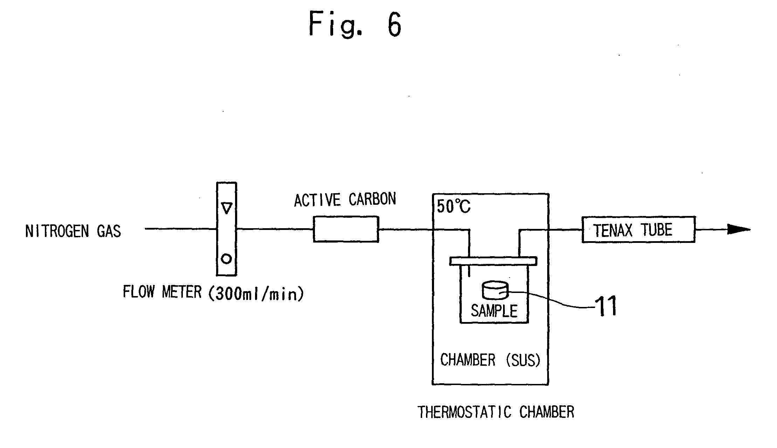

That is, as shown in Fig. 6, an O-ring 11 of a primary vulcanized product and that of a secondary vulcanized product, both made of fluorocarbon rubber (trademark: VITON ), were respectively put in SUS chambers, heated for 1 hour at the temperature of 50°C Tenax (trademark) tubes in which respective out-gases were sampled were mounted to a TCT to qualitatively and quantitatively measure the out-gases by the GC-MS.

As a result, the out-gas of the primary vulcanized product of the O-ring 11 made of fluorocarbon rubber (trademark: VITON ) showed 0.165 µg/g·hr, while the out-gas of the secondary vulcanized product showed 0.002 µg/g·hr.

### [D] Ammonia removal efficiency

Ammonia removal efficiency of chemical filter 1 was measured using the unit body 10 of the embodiment 2.

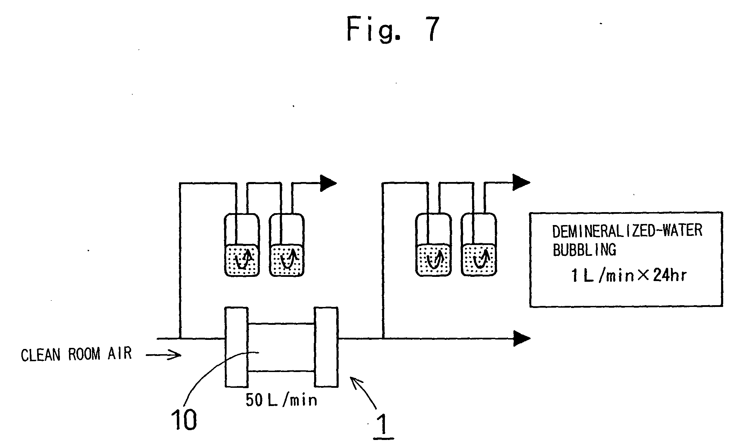

As shown in Fig. 7, air was supplied to the chemical filter 1. Air at the upstream and downstream sides was sampled through demineralized-water bubbling to measure the concentration of ammonia in the water by an ion chromatograph. The ion chromatography Model DX·100 made by NIPPON DIONEX CO., LTD was used as an analyzer.

As a result, the concentration of ammonia in the chemical filter at the upstream side showed 3.75 µg/m³, while that at the downstream side was decreased to 0.26 µg/m³, and the removal efficiency showed 93%.

### [E] Organic-matter removal efficiency

An organic-matter removal efficiency of the chemical filter 1 was measured using the unit body 10 of the embodiment 2.

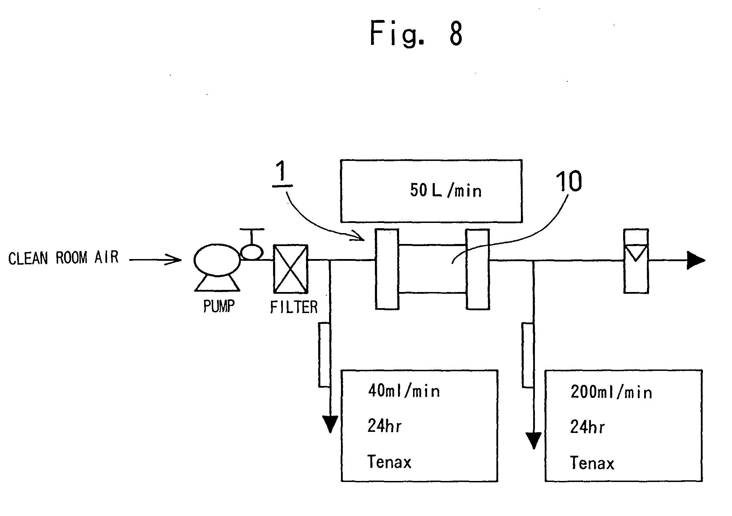

As shown in Fig. 8, the organic-matter concentration was measured by supplying air to the chemical filter 1 and sampling air at the upstream and downstream sides by Tenax (trademark) tubes. The flow rate of air supplied to the chemical filter 1 was set to 50 l/min.

The TOC (toluene-converted value) concentration at the upstream side of the chemical filter 1 showed 357.8 µg/m³, while that at the downstream side was decreased to 1.22 µg/m³, and the removal efficiency showed 99.7%.

Moreover, the concentration from xylene downward showed 296.3 µg/m³ at the upstream side of the chemical filter, while that at the downstream side was decreased to less than 0.01 µg/m³, and the removal efficiency showed 99.99% or more.

The above measurement results prove that the amount of out-gas discharged from the unit body is decreased through cleaning the unit body. By passing the out-gas through the chemical filter, it is possible to supply a gas in which concentration of organic-matter gases, having a boiling point of 150°C or higher, and that of ammonia were respectively about 1 ppb (v) or less.

Being composed as stated above, the present invention can supply a purified gas having a level lower than that causes troubles by contamination. Therefore, it is possible to provide a chemical filter capable of decreasing the troubles encountered in the conventional chemical filters in the semiconductor manufacturing systems.

## Claims

1. A chemical filter comprising:
a unit body;
an adsorbent housed in said unit body; and
said adsorbent adsorbing a gas, thereby allowing said chemical filter to supply an output gas having a concentration of ammonia of about 1 ppb(v) or less, and a concentration of an organic gas having a boiling point of about 150°C or higher of about 1 ppb(v) or less.

2. A chemical filter according to Claim 1, wherein said unit body is cleaned and treated by at least one of an organic solvent and demineralized water, and then baked at a temperature of about 100 to 300°C with receiving a continuous flow of a clean gas.

3. A chemical filter according to Claim 2, wherein said unit body is, after being baked, cooled with a flow of a clean air.

4. A chemical filter according to any one of Claims 1 to 3, further comprising:
an opening/closing section on said unit body for replacing adsorbents, said opening/closing section being fixed by a clamp;
a baffle member at an upstream side of said adsorbent;
a spacer at a downstream side of said adsorbent; and
a seal section using vulcanized fluorocarbon rubber.

5. A chemical filter according to any one of Claims 1 to 4, wherein said chemical filter is sealed and packaged in a vacuum-deaerated bag made of aluminum laminate.
